# EUROPÄISCHE PATENTANMELDUNG

(11) **EP 1 538 116 A1**
(43) Veröffentlichungstag der Anmeldung: **08.06.2005**
(21) Anmeldenummer: 04006069.1
(22) Anmeldetag: 15.03.2004
(51) Int. Cl.: B65G 47/31

(54) **Verfahren und Vorrichtung zum Transportieren und Verarbeiten von Werkstücken**

(30) Priorität: 02.12.2003 EP 03027611
(71) Anmelder: Schütz, Andreas, 32361 Preussisch Oldendorf (DE)
(72) Erfinder: Schütz, Andreas, 32361 Preussisch Oldendorf (DE)
(74) Vertreter: Dantz, Jan Henning

(57) **Zusammenfassung**

Verfahren zum Transportieren und Verarbeiten von Werkstücken oder Behältern (17), insbesondere zum Abfüllen von Flaschen, wobei die Werkstücke oder Behälter (17) über Transporteinrichtungen in Folge angeordneten Verarbeitungsmaschinen (41,42) zugeführt werden und in dem Zuführbereich zumindest einer Verarbeitungsmaschine (41,42) ein kontrollierter Stau der Behälter (17) erzeugt und dieser anschließend in überwiegendem Maße durch die Verarbeitungsmaschine (41,42) kontinuierlich abgebaut wird.

## Beschreibung

Die vorliegende Erfindung betrifft ein Verfahren zum Transportieren und Be- oder Verarbeiten von Werkstücken oder Behältern, insbesondere zum Abfüllen von Flaschen, wobei die Werkstücken oder Behälter über Transporteinrichtungen in Folge angeordneten Bearbeitungsmaschinen zugeführt werden, sowie eine Steuereinrichtung zur Durchführung des Verfahrens.

Zum automatischen Abfüllen von flüssigen, schütt- oder fließfähigen Medien, wie z.B. Getränke, Farbpulver oder Cremes, in Behälter sind Abfüllanlagen bekannt, die neben einer Füllmaschine nachfolgende weitere Bearbeitungsmaschinen aufweisen, beispielsweise eine Etikettiermaschine, eine Verpackungsmaschine, eine Bügel-Griff-Maschine, eine Paletteneinfoliermaschine oder dergleichen.

Diese Abfüllanlagen werden üblicherweise mit einer kontinuierlichen Geschwindigkeit betrieben, wobei die maximal mögliche Geschwindigkeit dauerhaft nicht ausgeschöpft wird, da es hierbei, wie sich gezeigt hat, häufig zu Betriebsstörungen kommt.

Trotz dieser Maßnahmen kann es jedoch durchaus zu störungsbedingten Betriebsunterbrechungen kommen, durch die die gesamte Anlage stillsteht.

Bestimmte Bearbeitungsmaschinen sind auf eine kontinuierliche Zuführung der Behälter, insbesondere hinsichtlich gleichbleibender Abstände der Behälter zueinander angewiesen, um optimal arbeiten zu können.

Eine steuerungstechnische Verknüpfung aller Bearbeitungsmaschinen untereinander, mit dem Ziel, die jeweiligen maschinellen Fähigkeiten zu berücksichtigen, bzw. einander anzupassen ist bislang weitgehend deshalb unterblieben, weil die Kosten für eine solche Anlage exorbitant hoch sind.

In Konsequenz bedeutet die nicht vorhandene Möglichkeit einen störungsbedingten Produktionsausfall innerhalb einer Betriebsschicht nicht aufholen zu können, dass insgesamt die Produktionsleistung reduziert wird.

In den bekannten und üblicherweise betriebenen Anlagen wird typischerweise eine Produktionsrate von 70 % dessen erreicht, was theoretisch möglich wäre.

Die auf Abfüllanlagen bezogene Problembeschreibung bezieht sich selbstverständlich auch auf andere Fertigungsanlagen, in denen über Transporteinrichtungen, vorzugsweise Transportbänder, Bearbeitungsmaschinen miteinander verknüpft sind.

Der Erfindung liegt daher die Aufgabe zugrunde, ein Verfahren der gattungsgemäßen Art so weiterzuentwickeln, mit dem eine höhere Produktionsrate im Verlauf einer Arbeitsschicht möglich ist.

Diese Aufgabe wird durch ein Verfahren gelöst, dass die Merkmale des Anspruchs 1 aufweist, sowie durch eine Steuereinrichtung mit den Merkmalen des Anspruchs 5.

Durch das erfindungsgemäße Verfahren wird nun erreicht, dass der entsprechenden Bearbeitungsmaschine während der Betriebszeiten auch der übrigen Bearbeitungsmaschinen, vor allem der vorgeschalteten, in kontinuierlicher Weise, also mit gleichem Abstand dem Behälter zugeführt werden, sodass deren eine störungsfreie Bearbeitung dauerhaft möglich ist.

Prinzipiell hat dies zur Folge, dass nach einer störungsbedingten Unterbrechung der Anlage die vorgeschalteten Bearbeitungsmaschinen mit einer höheren Bearbeitungsgeschwindigkeit fahren können, um gegebenenfalls den Produktionsausfall auszugleichen.

Der kontinuierliche Abbau des kontrollierten Staus im Zuführbereich der Bearbeitungsmaschine wird durch eine Erhöhung der Arbeitsgeschwindigkeit dieser Bearbeitungsmaschine überwiegend abgebaut, wobei dann die Bearbeitungsgeschwindigkeit über der der vorgeschalteten Maschinen liegt.

Nach erkanntem Abbau des Staus über die überwiegende Länge wird die Geschwindigkeit der Bearbeitungsmaschinen bis auf einen Minimalwert reduziert, sodass sich durch die dann höhere Geschwindigkeit der vorgeschalteten Bearbeitungsmaschinen wieder ein Stau aufbauen kann, bis dieser eine Maximallänge erreicht hat.

Danach erfolgt wiederum eine Erhöhung der Bearbeitungsgeschwindigkeit der Bearbeitungsmaschine bis zum Abbau des Staus.

In jedem Fall werden die Behälter aus einem Stau in die Bearbeitungsmaschine geführt, d.h. die Abstände der Behälter zueinander sind immer gleich.

Unabhängig davon, ob die vorgeschalteten Bearbeitungsmaschinen diskontinuierlich arbeiten, führt das Verfahren nach der Erfindung bei der Bearbeitungsmaschine, in deren Bereich es durchgeführt wird, zu einem optimierten Betrieb dieser Maschine.

Selbstverständlich besteht die Möglichkeit, das Verfahren bei allen, einer ersten Bearbeitungsmaschine nachgeordneten weiteren Bearbeitungsmaschinen vorzusehen, sodass die Produktionsrate, weitgehend unabhängig von auftretenden Störungen gleich bleibt. Insgesamt ergibt sich durch die Erfindung eine signifikante Rentabilitätsverbesserung.

Nach einer vorteilhaften Weiterbildung des Verfahrens ist vorgesehen, das Ende eines entstandenen Staus ebenso zu erkennen wie das Ende des weitgehend abgefahrenen Staus und nach erkennen dieser Stauenden die Geschwindigkeit der zugeordneten Bearbeitungsmaschine zu erhöhen bzw. zu reduzieren.

Eine Steuereinrichtung zur Durchführung des Verfahrens, wobei mehrere nacheinander angeordnete, jeweils durch Transporteinrichtungen zum Transport von zu bearbeitenden Behältern, wie Flaschen oder Kisten miteinander verbunden sind, ist dadurch gekennzeichnet, dass in dem Zuführbereich zumindest einer Bearbeitungsmaschine Sensoren vorgesehen sind sowie eine mit den Sensoren und der Bearbeitungsmaschine verbundene Steuereinheit, wobei die Sensoren die Anzahl von bzw. Menge an Behältern in dem Zuführbereich vor der Bearbeitungsmaschine erfassen, ein entsprechendes Signal an die Steuereinheit leiten und die Steuereinheit leiten und die Steuereinheit aus diesem Signal ein Signal an die Maschine leitet, um die Produktionsgeschwindigkeit der Bearbeitungsmaschine zu regeln.

Vorteilhafte Weiterbildungen der Erfindungen sind in den Unteransprüchen gekennzeichnet.

Das erfindungsgemäße Verfahren sowie die Steuereinrichtung zur Durchführung des Verfahrens werden nachfolgend anhand von zwei Ausführungsbeispielen unter Bezug auf beigefügte Zeichnungen beschrieben.

Es zeigen:
- Figur 1: eine schematische Darstellung einer Einwegflaschen-Abfüllanlage
- Figur 2: eine schematische Darstellung einer Mehrwegflaschen-Abfüllanlage
- Figur 3: eine Grafik, die die Produktionsgeschwindigkeit der mit einer Steuereinrichtung versehenen Maschine gegenüber einer Zeitskala zeigt und
- Figur 4: eine Grafik, die die Anzahl von Flaschen vor der mit einer Steuereinrichtung versehenen Maschine gegenüber einer Zeitskala zeigt.

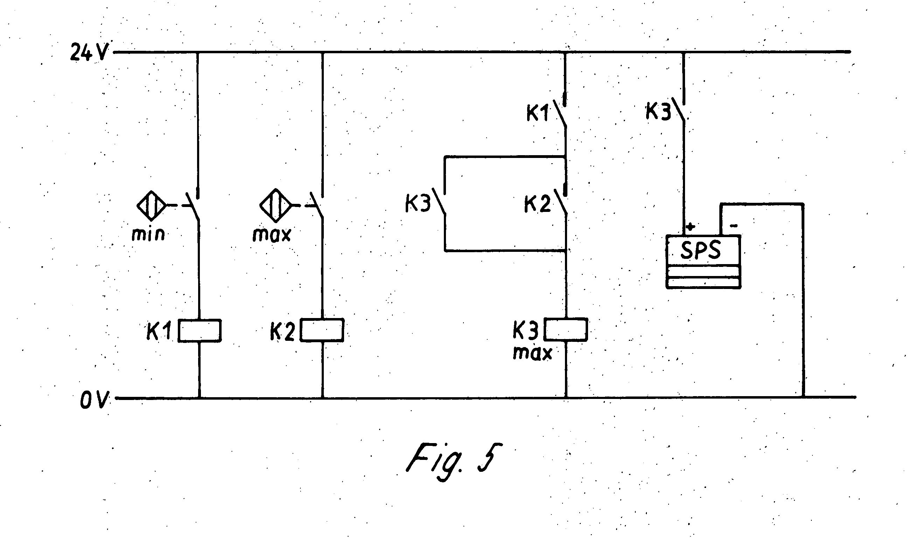

- Figur 5: einen elektrischen Schaltplan der Steuereinrichtung nach Anspruch 5.

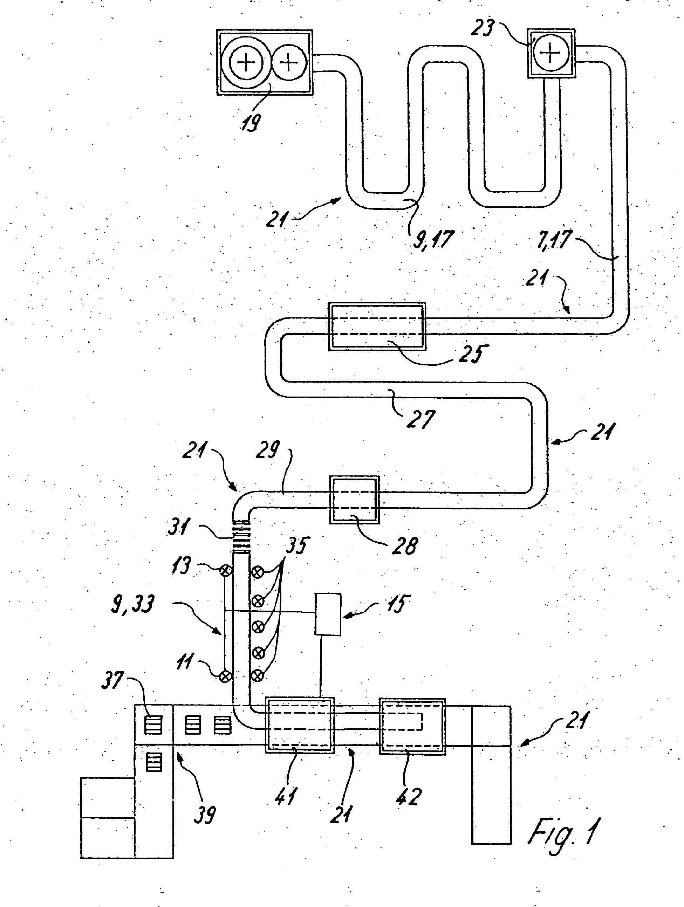

In einer Abfüllanlage für Einwegflaschen 17 in Figur 1 werden leere und gewaschene Flaschen einer Füll- und Einschraubmaschine 19 zugeführt, die die Flaschen mit einem Getränk füllt und verschraubt. Die Flaschen werden folgend über ein Transportband 21 einer Etikettiermaschine 23 zugeführt, die auf die abgefüllten Flaschen 17 Etiketten klebt, um die Flasche und somit das Produkt zu kennzeichnen. Folgend werden die Flaschen 17 über ein weiteres Transportband 21 einer Verpackungsmaschine 25 zugeführt, die die einzelnen Flaschen zu Kisten 27 bündelt. Die Kisten 27 werden über ein weiteres Transportband 21 einer Bügel-Griff-Maschine 28 zugeführt, die die einzelnen Kisten übereinander stapelt. Diese Kistenstapel 29 werden nun von einem weiteren Transportband 21 über einen Übergabebereich 31 einem Band 33 zugeführt, welches Lichtschranken 35 umfasst, die die Geschwindigkeit des Bandes 33 regeln. Am Ende des Bandes 33 werden Paletten 37 von einer Palettenzuführung 39 und die Kistenstapel 29 von dem Band 33 einer Paletteneinfoliermaschine 41 zugeführt, die die Kistenstapel 29 auf der Palette mit einer Folie umgibt, um diese für den Transport zu sichern. Über ein weiteres Transportband 21 gelangen die Paletten von dort zu einer Abräummaschine 42, die die Paletten über ein weiteres Transportband 21 einer nicht dargestellten Versandabteilung für die Paletten zuführt.

Die Maschinen, die bezüglich des Ablaufs der Abfüllanlage vor der Paletteneinfoliermaschine 41 angeordnet sind, arbeiten im Normalfall alle mit dergleichen Produktionsgeschwindigkeit von beispielsweise 17.000 Flaschen/h. Fällt eine dieser Maschinen aus, so bleiben die übrigen Maschinen stehen bzw. arbeiten noch so lange wie ein Vorrat an Behältern vor diesen zur weiteren Verarbeitung vorhanden ist.

Erfindungswesentlich ist die Anordnung von Sensoren an einer Transporteinrichtung vor einer Maschine, d.h. in einem Zuführbereich von Behältern zur Maschine, sowie eine Steuereinheit, die sowohl mit den Sensoren wie auch mit der Maschine verbunden ist. Die Sensoren erfassen die Anzahl von Behältern vor der Maschine, melden diese Daten an die Steuereinheit, die daraufhin die Geschwindigkeit der Maschine reguliert. Die Sensoren können z.B. durch Kameras, Gewichtssensoren oder bevorzugt durch Lichtschranken 11, 13 gebildet sein. Die Geschwindigkeit der Maschine ist durch die Steuereinheit 15 zwischen zwei festen Produktionsgeschwindigkeiten schaltbar oder auch kontinuierlich in einem durch die Maschine bestimmten Intervall variierbar.

Im Zuführbereich der Maschine, der die Lichtschranken 11, 13 und die Steuereinheit 15 zugeordnet sind wird durch eine gegenüber den vorgeschalteten reduzierte Geschwindigkeit ein kontrollierter Stau der Behälter geschaffen, der dann als Puffer fungiert. Hierzu können weitere Transportbänder oder Bänder vorgesehen sein, dass sich die Anzahl von abzufüllenden Behältern vor der betreffenden Maschine 41 erhöht. Es können jedoch auch gesonderte Pufferbereiche vorgesehen sein, in denen die Behälter oder Stapel "zwischengespeichert" werden. Um jedoch die Anordnung von platzbeanspruchenden Elementen zu vermeiden, wird folgende Variante bevorzugt: Bei bekannten Abspülanlagen sind die Transportbänder häufig nur zur Hälfte mit Behältern bzw. Stapeln gefüllt, d.h. diese laufen zur Hälfte leer. Bevorzugt werden die Transportbänder bzw. Bänder vollständig mit Behältern gefüllt, sodass diese keinen Leerraum aufweisen und sich somit die doppelte Anzahl von Behältern in der Abfüllanlage befindet.

Dies wirkt sich wie folgt auf die Produktion der Abfüllanlage auf: Die Maschinen vor der Paletteneinfoliermaschine 41 laufen alle mit einer höheren Produktionsgeschwindigkeit, z.B. 17.000 Flaschen/h als die Paletteneinfoliermaschine, die z.B. eine Produktionsgeschwindigkeit von 13.000 Flaschen/h hat. Theoretisch wäre somit eine Produktion von 13.000 Flaschen/h zu erwarten. Bei den gewählten Produktionsgeschwindigkeiten werden der Paletteneinfoliermaschine 41 jedoch immer mehr Stapel zugeführt als diese abführen kann. Auf diese Weise wächst die Anzahl von Stapeln vor der Maschine 41 ständig an. Irgendwann sind so viele Stapel vor der Paletteneinfoliermaschine 41 im Zuführbereich 9, d.h. auf dem Band 33, dass die zweite Lichtschranke 13 ständig unterbrochen ist und ein entsprechendes Signal an der Steuereinheit 15 anliegt. Diese schaltet daraufhin die Produktionsgeschwindigkeit der Paletteneinfoliermaschine 41 von 13.000 Flaschen/h auf 21.000 Flaschen/h hoch. Nun werden mehr Stapel von der Paletteneinfoliermaschine 41 abgeführt als von den vorigen Maschinen zugeführt. Somit wird die Anzahl von Stapeln vor der Maschine 41 ständig geringer. Dies hält solange an, bis die von der Bügel-Griff-Maschine 28 gelieferten Stapel sofort in die Paletteneinfoliermaschine 41 einlaufen. Die Lichtschranke 11 wird in diesem Fall in gleichen Zeitabständen für gleiche Zeiträume verdunkelt, was von der Steuereinheit registriert wird, die daraufhin die Produktionsgeschwindigkeit der Paletteneinfoliermaschine wieder auf 13.000 Flaschen/h senkt. Vorzugsweise ist jedoch die der Paletteneinfoliermaschine 41 zugeordnete erste Lichtschranke 11 mit einem solchen Abstand zur Paletteneinfoliermaschine positioniert, dass die Abstände zwischen den einzelnen Behältern oder Stapeln in dem Zwischenraum zwischen der ersten Lichtschranke 11 und der Paletteneinfoliermaschine 41 unverändert gleich groß bleibt, sodass bei Reduzierung der Produktionsgeschwindigkeit der Paletteneinfoliermaschine 41 sich alsbald der Stau erneut kontrolliert aufbaut, innerhalb der durch die beiden Lichtschranken 11, 13 vorgegebenen Strecke.

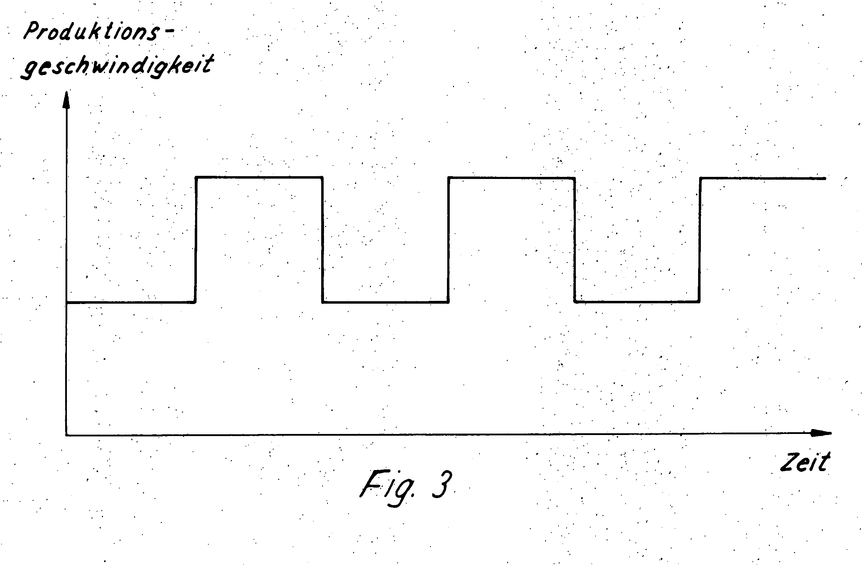

Trägt man nun die Produktionsgeschwindigkeit der Paletteneinfoliermaschine 41 gegen die Zeit auf, so ergibt sich eine Darstellung gemäß Figur 3. Die Produktionsgeschwindigkeit der Paletteneinfoliermaschine wird zwischen einem oberen Wert (21.000 Flaschen/h) und einem unteren Wert (13.000 Flaschen/h) geschaltet. Der Zeitraum, den die Paletteneinfoliermaschine mit der höheren Geschwindigkeit fährt hängt von der Größe des Staus ab. Je größer der Stau, d.h. der Puffer ist, desto länger kann die Maschine mit der höheren Geschwindigkeit fahren. Der Zeitraum, den die Paletteneinfoliermaschine mit der niedrigeren Geschwindigkeit fährt, hängt von dem Unterschied der Produktionsgeschwindigkeiten von der Paletteneinfoliermaschine und der vorigen Maschine ab. Je größer der Unterschied zwischen der Produktionsgeschwindigkeit der vorgeordneten Maschine (Bügel-Griff-Maschine 28) und der Maschine (Paletteneinfoliermaschine 41) ist, desto schneller ist der Stau von der Maschine (Paletteneinfoliermaschine 41) wieder aufgebaut. Durch Variation des Staus bzw. der Staugröße und des Produktionsgeschwindigkeitsunterschiedes kann somit eine für die Abfüllanlage optimale Konfiguration gefunden werden, um einen maximalen Ausstoß der gesamten Abfüllanlage zu erhalten, sodass, wie erwähnt, störungsbedingte Produktionsausfälle durch kurzzeitige erhöhte Leistung der der in diesem Fall Paletteneinfoliermaschine 41 vorgeschalteten Maschinen ausgeglichen werden können.

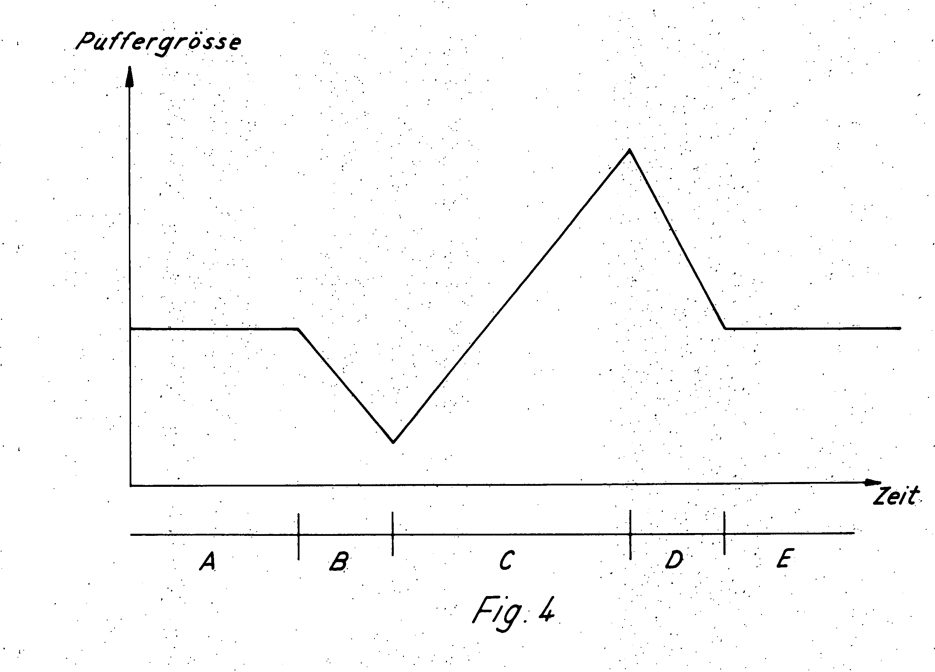

Es werden auch dann Vorteile erreicht, wenn die Abfüllanlage durch Ausfall einer Maschine stillsteht. Ist noch keine Fehlfunktion einer Maschine aufgetreten, so weist die Paletteneinfoliermaschine 41 eine konstante Produktionsgeschwindigkeit auf. Im linken Teil der Figur 4 ist daher die Anzahl von Stapeln vor der Paletteneinfoliermaschine 41 konstant bzw. leicht steigend (Abschnitt A der Figur 4), da die der Paletteneinfoliermaschine 41 vorgeschalteten Maschinen eine höhere Produktionsgeschwindigkeit aufweisen als diese. Fällt nun eine der der Paletteneinfoliermaschine 41 vorgeordneten Maschinen aus, so wird der Puffer vor der Paletteneinfoliermaschine abgebaut, da diese weiter arbeitet, jedoch keine Stapel an diese geliefert werden (Abschnitt B der Figur 4). Ist die defekte Maschine wieder repariert, so werden der Paletteneinfoliermaschine 41 wieder mehr Stapel zugeführt als diese verarbeiten kann und die Anzahl an Stapeln vor der Paletteneinfoliermaschine 41 steigt an (Abschnitt C der Figur 4). Dieser Anstieg hält so lange an, bis die Lichtschranke 13 ständig abgedunkelt ist und dadurch die Steuereinheit 15 die Produktionsgeschwindigkeit der Paletteneinfoliermaschine 41 steigert und somit wieder mehr Stapel durch die Paletteneinfoliermaschine 41 verarbeitet werden als an diese geliefert werden. Die Anzahl an Stapeln vor der Paletteneinfoliermaschine 41 sinkt (Abschnitt D der Figur 4). Dieser Prozess hält so lange an, bis die Lichtschranke 11 für gleich Zeiträume in gleichen Zeitabständen unterbrochen ist. Dies wird von der Steuereinheit 15 registriert, die daraufhin die Produktionsgeschwindigkeit der Paletteneinfoliermaschine 41 wieder auf den niedrigeren Wert regelt.

Da gegenüber den herkömmlichen Abfüllanlagen ein größerer Puffer vor der Maschine (z.B. der Paletteneinfoliermaschine 41) gegeben ist, dauert es länger, bis die Maschine keine weiter zu verarbeitenden Stapel mehr hat. Dadurch wird die Zeit, die zur Reparatur der defekten Maschine zur Verfügung steht, ohne einen Produktionsausfall der Abfüllanlage zu erleiden, größer und somit die Wahrscheinlichkeit für einen Produktionsausfall der gesamten Anlage geringer.

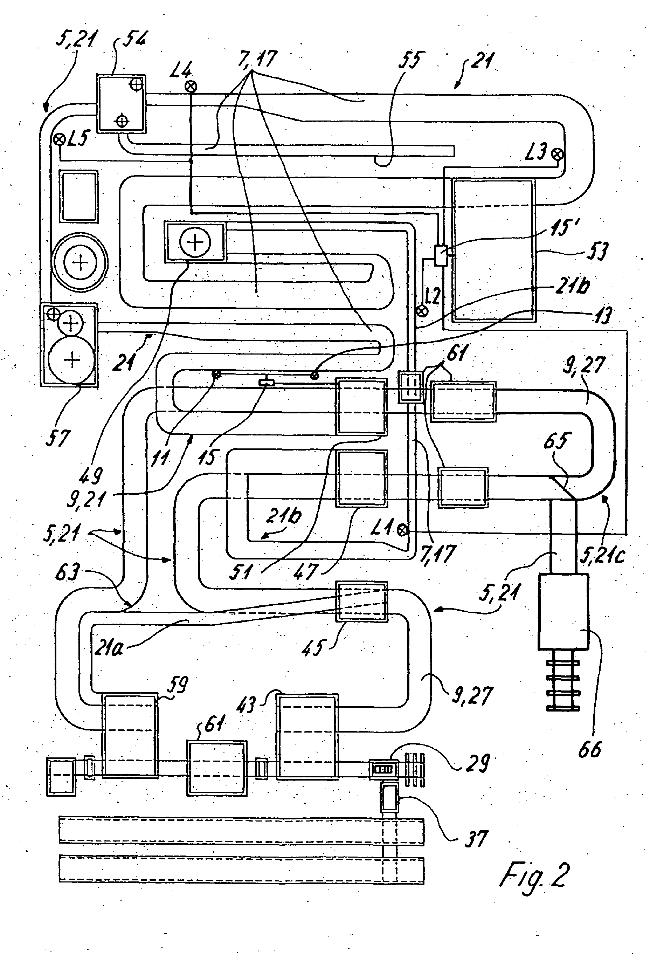

Im Folgenden wird in einem weiten Ausführungsbeispiel eine Mehrweg-Flaschen-Abfüllanlage beschrieben, die in Figur 2 dargestellt ist. Ein Entpacker 43 entpackt die auf Paletten 37 eingehenden Kisten 27 mit Mehrweg-Flaschen 17 von den Paletten und führt diese einem Transportband 21 zu, das die Kisten 27 einem Sortierer 45 zuführt. Der Sortierer 45 trennt braune Kisten mit weißen Flaschen, die dem Transportband 21 und somit der Abfüllanlage zugeführt werden, und grüne Kisten mit grünen Flaschen, die über das Transportband 21a aussortiert und somit nicht der Abfüllanlage zugeführt werden. Die braunen Kisten mit weißen Flaschen werden über das Transportband 21 einem Auspacker 47 zugeführt, der die Flaschen über ein Transportband 21b einem Abschrauber 49, der die Schraubverschlüsse von den Flaschen schraubt, zuführt und die leeren Kisten 27 über Transportband 21c einem Einpacker 51 zuführt, der die von der Abfüllanlage befüllten Flaschen wieder in die Kisten füllt. Nachdem der Schraubverschluss von den Flaschen geschraubt ist, erreichen die Flaschen über ein weiteres Transportband eine Spülmaschine 53, in der die Flaschen gereinigt werden. Über ein weiteres Transportband 21 werden die Flaschen an einem Inspektor 54 vorbeigeführt, der die Flaschen untersucht. Ist eine Flasche nicht weiter zu verwenden, so wird diese in einem Abstellbereich 55 zwischengelagert und anschließend einem Recycling zugeführt. Ist die Flasche weiter zu verwenden, so gelangt diese über ein Transportband 21 zu einem Füller 57, in dem die Flaschen neu befüllt und etikettiert werden. Befüllt und etikettiert werden die Flaschen über ein weiteres Transportband 21 dem ein Packer 51 zugeführt ist, der die Flaschen wieder in Kisten füllt. Über ein Transportband gelangen die in Kisten verpackten Mehrweg-Flaschen zu einem Verpacker 59, von dem die braunen Kisten mit vollen weißen Flaschen und die grünen Kisten mit leeren grünen Flaschen, die diesen über das Transportband 21 a erreichen, auf Paletten verbracht werden, die folgend automatisch weiter verarbeitet werden (nicht dargestellt). Um die Transportbänder 21, 21 a, 2 1 b und 2 1 c anzutreiben, sind diesen Getriebe 61 zugeordnet.

Durch das Aussortieren des Sortierers 45 werden die Abstände der braunen Kisten auf dem Transportband 21 zu groß und zu unregelmäßig, wodurch der Produktionsablauf nicht optimal ist.

Der Verpacker 59 kann Leergut nur dann abfahren, wenn auch die gleiche Menge an Kisten mit vollen Flaschen vor der Maschine 59 vorhanden ist. Fehlt Vollgut, so steht der Verpacker 59 still, wodurch auch der Sortierer 45 stillsteht. Es ist daher ein Schalter 63, der bevorzugt als Lichtschranke ausgebildet ist, angeordnet, der das Band mit vollen Kisten weiterlaufen lässt, sodass dann wieder beide Bänder bzw. beide Maschinen laufen können.

Erfindungsgemäß sind dem Einpacker 51 wie im vorigen Ausführungsbeispiel eine erste 11 und eine zweite 13 Lichtschranke im Zuführbereich 9 angeordnet, die über eine Steuereinheit 15 mit dem Einpacker 51 verbunden sind. Der Aufbau, die Funktion und die Wirkung dieser drei Elemente 11, 13 und 15 ist vollständig analog der im vorigen Ausführungsbeispiel, wodurch eine nähere Beschreibung an dieser Stelle entfällt. Vorteilhaft ist der Einpacker 51 mit einer erfindungsgemäßen Vorrichtung versehen, da es für einen reibungslosen Produktionsablauf notwendig ist, dass zwischen dem Einpacker 51 und dem Auspacker 47 auf dem Transportband 21 c immer eine ausreichende Anzahl von leeren Kisten zur Verfügung steht.

Für einen reibungslosen Produktionsablauf ist es nämlich notwendig, dass zwischen dem Auspacker 47 und dem Einpacker 51 eine ausreichende Anzahl von Flaschen zum Abschrauben, Spülen, Inspizieren, Befüllen, Etikettieren und Einpacken in Kisten zur Verfügung steht. Daher sind erfindungsgemäß Lichtschranken L1, L2, L3, L4 und L5 angeordnet und mit einer weiteren Steuereinheit 15' verbunden. Die Steuereinheit 15' kann mit dem Abschrauber 49, der Spülmaschine 53 und dem Füller 57 verbunden sein. Auf diese Weise kann die Produktionsgeschwindigkeit der Maschinen 49, 53 und 57 individuell und abhängig von der jeweiligen Anzahl von Flaschen vor den Maschinen 49, 53 bzw. 57 und/oder auch vor den übrigen Maschinen 47 und 51 durch die Steuereinheit 15' geregelt werden. Die Steuereinheit 15' kann mit allen drei Maschinen 49, 53 und 57, mit nur einer der drei Maschinen, wie im vorliegenden Fall der Maschine 53, oder mit zwei der drei Maschinen verbunden sein.

In einer Variante entfällt die Steuereinheit 15 und die erste 11 und zweite 13 Lichtschranke sind ebenfalls mit der Stuereinheit 15' verbunden, die auch die Steuerung der Produktionsgeschwindigkeit des Einpackers 51 übernimmt.

In den beiden zuvor beschriebenen Ausführungsbeispielen werden die Behälter 7, die den Maschinen zugeführt werden, durch Kistenstapel 29 oder Ein- oder Mehrwegflaschen 17 gebildet. Die Behälter können jedoch durch jede Form von Behältern, z.B. Eimern, Farb- oder Cremedosen, gebildet sein.

In den beiden zuvor beschriebenen Ausführungsbeispielen ist die Transporteinrichtung 5 durch Transportbänder 21, 21a, 21b, 21c oder Bänder 33 gebildet. Die Transporteinrichtung kann jedoch auch beliebig ausgebildet sein, z.B. durch Endlosbänder, Rollenbänder oder Hängebahnen.

Bei nur teilweise gefüllten Leergut-Kisten stehen nach dem Auspacken im Folgenden zu viele Kisten zum Verpacken mit vollen Flaschen zur Verfügung. Um eine Staubildung mit leeren Kisten zu verhindern, die den Betriebsablauf stören würde, ist am Transportband 21b, dem Auspacker 47 nachgeordnet, ein Schalter 64, vorzugsweise ein Kontakt- oder Druckschalter, bspw. in Form eines Magnetschalters, vorgesehen, mit dem eine Lückenbildung innerhalb des Transportstroms von leeren Flaschen erkennbar ist, da dann ein durch die transportierten Flaschen durch Anlage auf den Schalter 64 ausgeübter Druck nicht mehr gegeben ist. In diesem Fall wird über den Schalter 64 eine im Bereich des Transportbandes 21c angeordnete Weiche 65, z.B. als Sperrklappe, derart gestellt, daß die leeren Kisten in einen Puffer 66 umgeleitet werden. Bei vollständigem Transportstrom mit leeren Flaschen und dadurch bedingtem Betätigen des Schalters 64 wird die Weiche 65 zurückgestellt und die leeren Kisten 27 über den Zuführbereich 9 wieder in den Betriebsablauf eingeführt.

### Bezugszeichenliste

- 3: Abfüllanlage
- 5: Transporteinrichtung
- 7: Behälter
- 9: Zuführbereich
- 11: erste Lichtschranke (Sensoren)
- 13: zweite Lichtschranke (Sensoren)
- 15, 15': Steuereinheit
- 17: Ein- bzw. Mehrwegflasche
- 19: Füll- und Einschraubmaschine
- 21: Transportband
- 21 a: Transportband
- 21b: Transportband
- 21 c: Transportband
- 23: Etikettiermaschine
- 25: Verpackungsmaschine
- 27: Kisten
- 28: Bügel-Griff-Maschine
- 29: Kistenstapel
- 31: Übergabebereich
- 33: Band
- 35: Lichtschranke
- 37: Paletten
- 39: Palettenzuführung
- 41: Paletteneinfoliermaschine
- 42: Abräummaschine
- 43: Entpacker
- 45: Sortierer
- 47: Auspacker
- 49: Abschrauber
- 51: Einpacker
- 53: Spülmaschine
- 54: Inspektor
- 55: Abstellbereich
- 57: Füller
- 59: Verpacker
- 61: Getriebe
- 63: Schalter
- 64: Schalter
- 65: Weiche
- 66: Puffer

- L1, L2, L3, L4, L5: Lichtschranken

## Patentansprüche

1. Verfahren zum Transportieren und Be- oder Verarbeiten von Werkstücken oder Behältern, insbesondere zum Abfüllen von Flaschen, wobei die Werkstücke oder Behälter über Transporteinrichtungen (21) in Folge angeordneten Verarbeitungsmaschinen (41) zugeführt werden, **dadurch gekennzeichnet, dass** in dem Zuführbereich zumindest einer Verarbeitungsmaschine (41) ein kontrollierter Stau der Behälter erzeugt und dieser anschließend in überwiegendem Maße durch die Verarbeitungsmaschine kontinuierlich abgebaut wird.

2. Verfahren nach Anspruch 1, **dadurch gekennzeichnet, dass** der Stau durch eine gegenüber vorgeschalteten Maschinen geringere Verarbeitungsgeschwindigkeit der Verarbeitungsmaschine (41) und der Abbau durch eine gegenüber den vorgeschalteten Verarbeitungsmaschinen höhere Geschwindigkeit der Verarbeitungsmaschine (41) abgebaut wird.

3. Verfahren nach Anspruch 1 oder 2, **dadurch gekennzeichnet, dass** die Geschwindigkeitsveränderung zum Aufbau bzw. Abbau des Staus kontinuierlich erfolgt.

4. Verfahren nach Anspruch 1, **dadurch gekennzeichnet, dass** der Aufbau des Staus durch eine minimale Geschwindigkeit der Verarbeitungsmaschine (41) und der Abbau des Staus durch deren maximale Geschwindigkeit erfolgt.

5. Steuereinrichtung zur Durchführung des Verfahrens nach Anspruch 1 in einer Ver- oder Bearbeitungsanlage, insbesondere einer Abfüllanlage (3), wobei die Abfüllanlage (3) zur Durchführung bestimmter Verfahrensschritte mehrere Verarbeitungsmaschinen (19, 23, 25, 28, 41, 42) umfasst, die durch eine Transporteinrichtung (21) für in der Abfüllanlage zu verarbeitende Gegenstände wie Flaschen (17) oder Kisten (27) miteinander verbunden sind, sodass die Gegenstände (17, 27) automatisch von einer Verarbeitungsmaschine zu einer folgenden Verarbeitungsmaschine transportiert werden, **dadurch gekennzeichnet, dass** in einem Zuführbereich (9) vor der Bearbeitungsmaschine (41) Sensoren (11, 13, 35) zum Erfassen einer minimalen und einer maximalen Anzahl von vor der der Verarbeitungsmaschine (41) befindlichen Gegenständen 29 angeordnet sind und eine Steuereinheit (15) mit den Sensoren (11, 13, 35) und der Verarbeitungsmaschine (41) verbunden ist, wobei die Steuereinheit (15) so ausgebildet ist, dass sie die Verarbeitungsmaschine (41) bei Erfassung der minimalen Anzahl auf eine erste Verarbeitungsgeschwindigkeit regelt und bei Erfassung der maximalen Anzahl auf eine zweite Verarbeitungsgeschwindigkeit, die größer ist als die erste Verarbeitungsgeschwindigkeit, regelt.

6. Steuereinrichtung nach Anspruch 5, **dadurch gekennzeichnet, dass** die erste Verarbeitungsgeschwindigkeit um einen Differenzwert unter einer mittleren Verarbeitungsgeschwindigkeit und die zweite Verarbeitungsgeschwindigkeit um den Differenzwert über der mittleren Verarbeitungsgeschwindigkeit liegt.

7. Steuereinrichtung nach Anspruch 5 oder 6, **dadurch gekennzeichnet, dass** die Sensoren durch Lichtschranken, Kameras oder Gewichtssensoren gebildet sind.

8. Steuereinrichtung nach Anspruch 6 oder 7, dad die Sensoren durch Lichtschranken, Kameras oder Gewichtssensoren gebildet sind.

9. Steuereinrichtung nach Anspruch 6 oder 7, **dadurch gekennzeichnet, dass** der Verarbeitungsmaschine (41) eine andere Verarbeitungsmaschine (28) vorgeschaltet ist, die mit der mittleren Verarbeitungsgeschwindigkeit arbeitet.

10. Steuereinrichtung nach einem der vorhergehenden Ansprüche 5 bis 9, **dadurch gekennzeichnet, dass** mehrere Verarbeitungsmaschinen (19, 23, 25, 27, 28, 41, 42) der Abfüllanlage (3) in einem jeweiligen vorgeschalteten Zuführbereich Sensoren aufweisen und mit einer Steuereinrichtung (15) verbunden sind.

11. Steuereinrichtung nach Anspruch 10, **dadurch gekennzeichnet, dass** eine zentrale Steuereinrichtung für mehrere Verarbeitungsmaschinen vorgesehen ist.

12. Steuereinrichtung nach einem der vorhergehenden Ansprüche 5 bis 11, **dadurch gekennzeichnet, dass** die Steuereinrichtung zur Regelung der Geschwindigkeit der Transporteinrichtung (21) ausgebildet ist.

13. Verarbeitungsmaschine für eine Abfüllanlage (3), **gekennzeichnet durch** eine Steuereinrichtung (15) nach einem der Ansprüche 5 bis 11.

14. Abfüllanlage (3) mit mindestens einer Verarbeitungsmaschine (41) nach Anspruch 12.
